# EUROPEAN PATENT SPECIFICATION

(11) **EP 4 585 519 B1**
(45) Date of publication and mention of the grant of the patent: **02.12.2026**
(21) Application number: 24221004.5
(22) Date of filing: 18.12.2024
(51) Int. Cl.: B64D 45/02, B64F 5/10, B64C 3/18, B64C 3/26, F16B 33/00, F16B 37/14, F16B 11/00

(54) **JIG FOR SPARK CONTAINMENT CAPS**
SPANNVORRICHTUNG FÜR FUNKENSCHUTZKAPPEN
GABARIT POUR CAPUCHONS DE CONFINEMENT D'ÉTINCELLES

(30) Priority: 11.01.2024 GB 202400425
(43) Date of publication of application: 16.07.2025
(73) Proprietor: Airbus Operations Limited, Bristol BS34 7PA (GB)
(72) Inventor: DOBBIN, Richard, Bristol, BS34 7PA (GB)
(74) Representative: Ribeiro, James Michael

(56) References cited:
- EP-A1- 3 961 055
- US-A1- 2014 209 736
- US-A1- 2021 221 532

## Description

### FIELD OF THE INVENTION

The present invention relates to a method of securing a first structure to a second structure with fasteners and spark containment caps, and a jig for use in such a method. By way of example, the first and second structures may be parts of an aircraft wing.

### BACKGROUND OF THE INVENTION

On some new aircraft wing designs, access to the inside of the wings (to tighten nuts) is not possible and therefore fasteners must be installed from the outside of the wing structure - this is known as "one-way assembly".

Other wing assembly concepts take this one step further in that the drilling and fastening is performed without disassembling the wing skin from the structure, i.e. wing skins are not removed for cleaning or de-burring. This is known as "single sided assembly".

Fasteners for aircraft fuel tanks, or other equivalent structures, may require a safety compliant protection from potential ignition sources due to a direct lightning attachment current or conducted current flowing through the fuel tank structure. Spark containment caps can provide this protection, but the cap may need to be fitted prior to the drilling operation. Accurate positioning of the cap and drilling is therefore imperative to ensure that the drill break-out and fastener installation occurs inside the cap.

### SUMMARY OF THE INVENTION

A first aspect of the invention provides a method of securing a first structure to a second structure, the method comprising: providing a jig assembly comprising spark containment caps carried by a jig; mounting the jig assembly so that the spark containment caps and the jig contact the first structure; securing the spark containment caps to the first structure by injecting adhesive material into contact with the first structure and the spark containment caps and then curing the adhesive material; removing the jig after the adhesive material has cured; and securing the first structure to the second structure with fasteners, each fastener having a tail which is inserted through the first and second structures and into a respective one of the spark containment caps.

Optionally the jig comprises jig injection ports, and the adhesive material is injected into contact with each spark containment cap through a respective one of the jig injection ports.

Optionally each spark containment cap comprises a cap base which contacts the first structure and is located in a respective pocket of the jig and a cap body which receives the tail of a respective fastener and protrudes from the pocket; and the adhesive material is injected into each pocket via a respective one of the jig injection ports.

Optionally air displaced by the adhesive material escapes via exhaust ports during the injection of the adhesive material.

Optionally the jig comprises jig exhaust ports, and air displaced by the adhesive material escapes via the jig exhaust ports during the injection of the adhesive material.

Optionally the adhesive material is injected into contact with the jig; an adhesive bond is formed between the adhesive material and the jig on curing of the adhesive material; and the adhesive bond is broken to enable the removal of the jig.

Optionally the jig has a profiled jig feature which matches a corresponding profiled feature of the first structure, and the profiled jig feature is aligned with the corresponding profiled feature of the first structure to locate and orient the jig assembly as it is mounted.

Optionally the profiled jig feature contacts the corresponding profiled feature of the first structure.

Optionally the method further comprises forming fastener holes through the first and second structures after the adhesive material has cured, wherein the tails of the fasteners are inserted through the fastener holes.

Optionally the fastener holes are formed by drilling through the first and second structures in a single drilling operation.

Optionally the jig is removed before the first structure is secured to the second structure with the fasteners.

Optionally each spark containment cap is carried in a respective pocket of the jig.

Optionally the method further comprises clamping the jig to the first structure with a clamping force; and removing the clamping force to enable the jig to be removed.

Optionally the method further comprises pressing the spark containment caps against the first structure with the jig to clamp the spark containment caps to the first structure.

Optionally the method further comprises expanding the tails of the fasteners after they have been inserted into the spark containment caps.

Optionally the jig comprises resilient seal members, each resilient seal member contacts the first structure or a respective one of the spark containment caps, and each resilient seal member inhibits the escape of the adhesive material during injection.

Optionally the spark containment cap comprises: a cap base which contacts the first structure, a cap body which receives the tail of the fastener, and a ledge between the cap base and the cap body, wherein the ledge meets the cap body at a concave corner and the ledge meets the cap base at a convex corner; a skirt which is seated on the ledge, the skirt comprising an skirt injection port; and a pocket between the skirt and the cap base, wherein the adhesive material is injected into the pocket via the skirt injection port and cures to form an adhesive bond with the first structure, an adhesive bond with the cap base, and an adhesive bond with the skirt.

Optionally the first structure is a rib foot of an aircraft wing rib and the second structure is a skin of an aircraft wing.

Optionally the second structure provides a boundary of an aircraft fuel tank.

A further aspect of the invention provides a jig comprising a plate with a plurality of pockets each configured to receive a respective spark containment cap, each pocket having an opening terminating at a rim, and an axial hole opposite the opening; a plurality of jig injection ports each configured to enable adhesive material to be injected into a respective one of the pockets via the jig injection port; and a plurality of jig exhaust ports each configured to enable air to escape from a respective one of the pockets via the jig exhaust port.

### BRIEF DESCRIPTION OF THE DRAWINGS

Embodiments of the invention will now be described with reference to the accompanying drawings, in which:
Figure 1 shows an aircraft;
Figure 2 shows a rib and three associated jigs;
Figure 3 is an enlarged view showing a single rib foot and associated jig assembly;
Figure 4 shows an injection process for one of the caps;
Figure 5 is a plan view of a single rib foot;
Figure 6 is a plan view of the rib foot of Figure 5 after a jig assembly has been installed;
Figure 7 shows the cap of Figure 4 after the adhesive material has been injected;
Figure 8 shows the cap of Figure 4 after the jig has been removed;
Figure 9 shows a joint with a blind fastener inserted into the cap of Figure 4;
Figure 10 shows an alternative jig assembly, with adhesive material being injected into one of the caps;
Figure 11 shows a rib and three alternative jig assemblies;
Figure 12 is an enlarged view two of the alternative jig assemblies;
Figure 13 shows a G-clamp arrangement;
Figure 14 shows a vacuum clamping arrangement;
Figure 15 shows an alternative cap and jig design with a cap skirt;
Figure 16 shows a further alternative cap and jig design with a blow moulded cap;
Figure 17 shows a further alternative cap and jig design with a blow moulded cap and a skirt;
Figure 18 is an enlarged view of the cap and jig design of Figure 17;
Figure 19 shows a further alternative cap and jig design with O-rings;
Figure 20 shows a further alternative cap and jig design with a gasket;
Figure 21 shows a further alternative cap and jig design with O-rings; and
Figure 22 shows a further alternative cap and jig design with a blow moulded cap, a skirt and an O-ring.

### DETAILED DESCRIPTION OF EMBODIMENT(S)

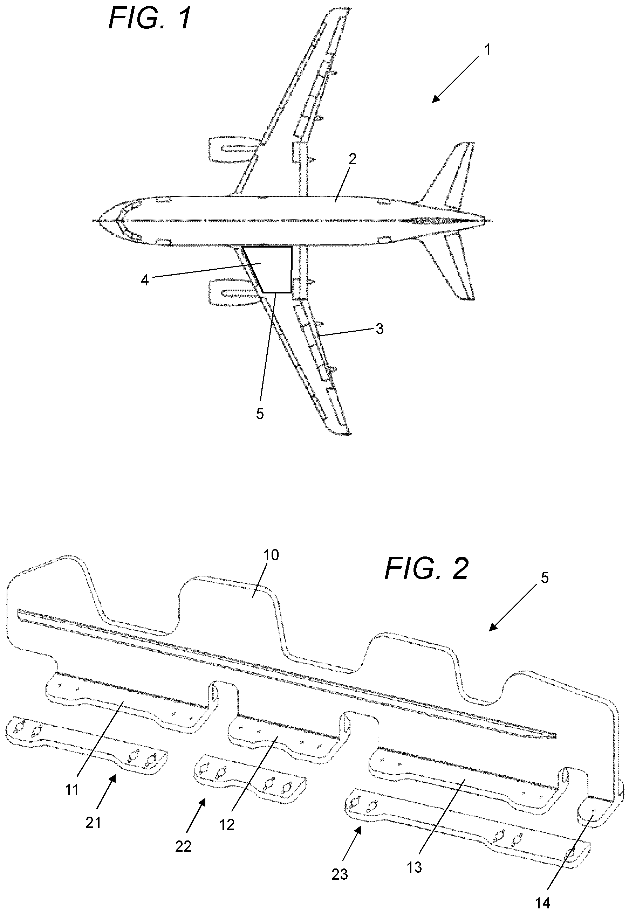

The aircraft 1 of Figure 1 includes a fuselage 2 and wings 3 extending from the fuselage 2. Fuel tanks are formed in the fuselage and wings 3. One such fuel tank 4 is schematically shown in Figure 1. The upper and lower boundaries of the tank 4 are provided by upper and lower skins of the wing 3, the fore and aft boundaries of the tank 4 are provided by forward and rear spars of the wing, and the inboard and outboard boundaries of the fuel tank 4 are provided by wing ribs 5.

The wing 3 is manufactured by assembling the skins, spars and ribs to form a wing box, then joining them together with fasteners. In a traditional method, the fasteners are two-sided fasteners (for example a nut and bolt) which require access to both sides of the joint to tighten the nut. In the examples below, the fasteners are blind fasteners which can be both inserted and expanded from one side only (outside the wing box).

Figure 2 shows part of an exemplary one of the wing ribs 5 before assembly to form the wing box. The wing rib 5 comprises a web 10 and rib feet 11-14. During assembly, fasteners are used to attach the rib feet 11-14 to one of the wing skins. Mousehole recesses between the rib feet 11-14 provides passageways for skin-stiffening stringers (not shown) to pass as they extend along the span of the wing.

The larger rib feet 11-13 each have a single row of four fastener locations (each indicated by a cross) for inserting a fastener and the smaller rib foot 14 has a single fastener location. Before the wing rib 5 is assembled as part of the wing box, spark containment caps are fitted at each fastener location. Such caps provide a safety compliant protection from potential ignition sources due to a direct lightning attachment current or conducted current flowing through the fuel tank structure.

Three jigs 21-23 are shown in Figure 2, each comprising pockets for receiving spark containment caps. Each jig 21, 22 has four pockets and the larger jig 23 has five pockets.

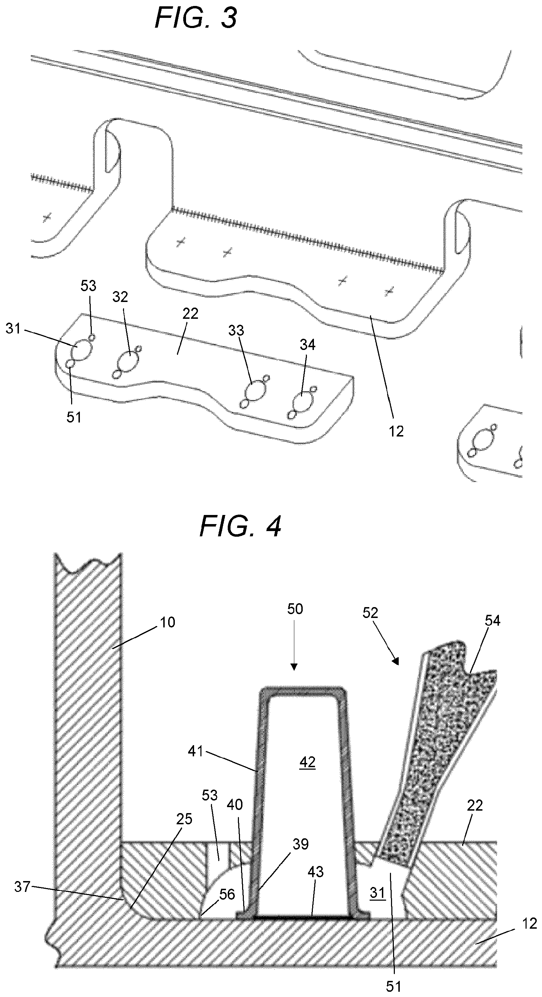

The jigs 21-23 are provided as separate parts (as shown in Figures 2 and 3) which are then mounted on the wing rib and optionally clamped to hold them in place.

An exemplary one of the rib feet 12 and its associated jig 22 are shown in Figures 3-9.

The jig 22 comprises four pockets 31-34 each designed to carry a respective spark containment cap, one of such caps 50 being shown in Figure 4.

Before being installed on the rib foot, spark containment caps are fitted into each of the four pockets 31-34 to provide a jig assembly. Note that the spark containment caps are not shown in Figure 3 in order to make the pockets 31-34 visible.

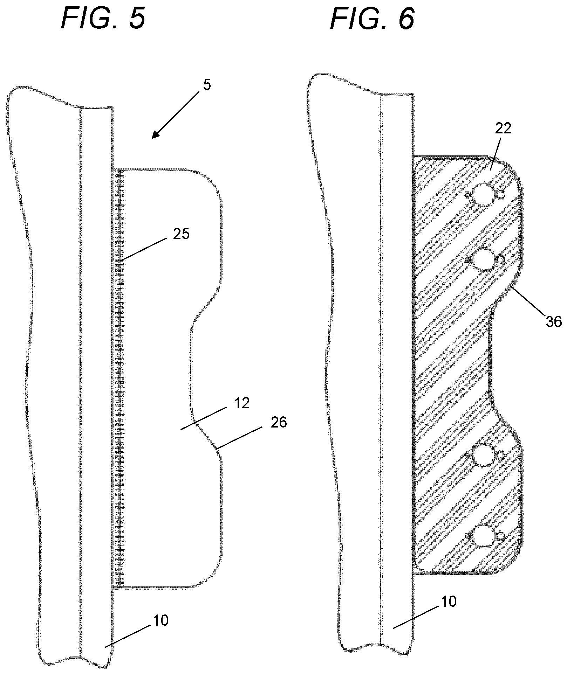

The rib foot 12 is a flange which extends from a root where it meets the web 10, to a profiled outer edge 26 shown in Figure 5.

The root of the rib foot has a profiled surface 25 or fillet with concave curvature where it meets the web 10 as shown in Figure 4.

The jig 25 comprises a plate which extends from an inner edge where it meets the web 10 as shown in Figure 4 to a profiled outer edge 36 shown in Figure 6. As shown by comparison of Figure 5 and Figure 6, the planform shape of the profiled outer edge 26 of the rib foot matches the planform shape of the profiled outer edge 36 of the jig 22.

The inner edge of the jig 22 has a profiled surface 37, shown in Figure 4, with convex curvature which contacts and mates with the concave profiled surface 25 at the root of the rib foot.

Each spark containment cap is carried in a respective pocket 31-34 of the jig. Figure 4 shows an exemplary one of the spark containment caps 50 fitted into a pocket 31, and the other caps are mounted in the similar pockets 32-34. The pocket 31 has an opening terminating at a rim 56, and an axial hole opposite the opening which can be seen in Figure 3.

The spark containment cap 50 comprises a cap base 39 with a rim 40; a cap body 41 with a cavity 42; and an insulating barrier 43 fitted to the cap base 39.

The cap base 39 is located in the pocket 31, and the cap body 41 protrudes from the pocket via the axial hole in the pocket 31. The cap base 39 has a tapering diameter which prevents it from passing through the axial hole in the pocket.

After the jig assembly is mounted on the rib foot as shown in Figure 4, the rim 40 and the insulating barrier 43 of the cap each contact the rib foot 12. The planar lower surface of the jig 22 also contacts the planar upper surface of the rib foot 12.

Next the spark containment caps are secured to the rib foot 12 by injecting adhesive material 54 into contact with the rib foot 12 and the spark containment caps and then curing the adhesive material.

The injection process is shown in Figure 4 for the exemplary one of the caps 50. The jig 22 comprises a jig injection port 51, and the adhesive material 54 is injected through the jig injection port 51 and into the pocket 31 between the cap base 39 and the jig 22 by an injection device 52.

The jig 22 also has a jig exhaust port 53, and air displaced from the pocket 31 by the adhesive material escapes via the jig exhaust port 53 during the injection of the adhesive material.

Emergence of adhesive material from the jig exhaust port 53 provides an indication that the pocket 31 is filled with adhesive material, so the operator of the injection device 52 can stop the injection process.

The adhesive material 54 may be a polysulphide fast curing sealant, a polythioether fast sealing sealant, or any other suitable adhesive material.

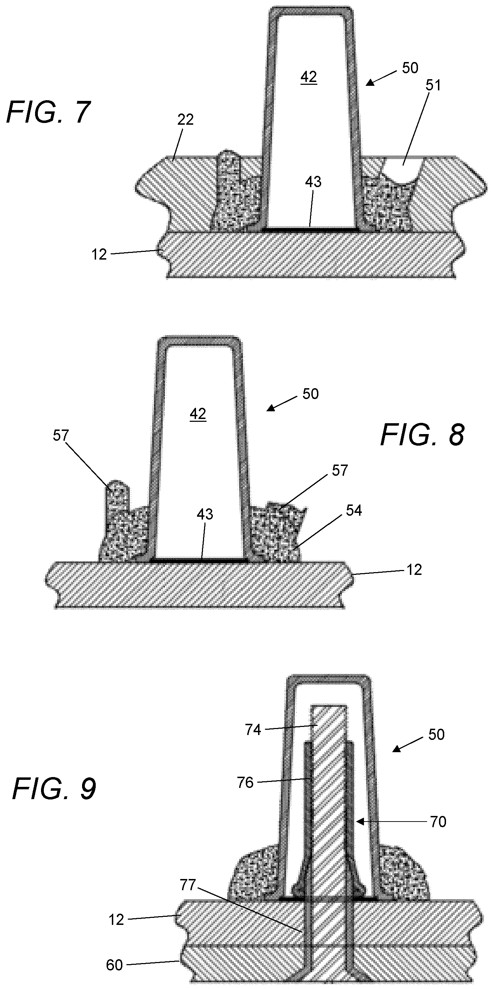

Figure 7 shows the cap 50 after the adhesive material 54 has been injected. The adhesive material 54 forms an annular bead which is in contact with the rib foot 12, the jig 22 and the outer surface of the cap base 39. Sealant material also fills the jig exhaust port 53 and part of the jig injection port 51 to form a pair of protruding stubs 57.

The adhesive material 54 is then allowed to cure at room temperature so it forms adhesive bonds with the rib foot 12, the jig 22 and the outer surface of the spark containment cap 50.

After the adhesive material has cured and solidified, the clamping force is removed to enable the jig 22 to be removed, leaving the adhered cap shown in Figure 8. The adhesive bond between the adhesive material and the jig is broken to enable the removal of the jig. The protruding stubs 57 of cured adhesive material are then trimmed away.

To make it easy to break the adhesive bond between the adhesive material and the jig, the jig 22 may be made of a lower adhesion material than the rib foot 12 and the cap 50, such as polytetrafluoroethylene (PTFE) or silicone. Typically the rib foot 12 is made of Aluminium or carbon-fibre reinforced epoxy resin. Typically the body of the cap 50 is formed by injection moulding or similar. A suitable cap material is a glass filled polyetherimide (PEI) resin such as Ultem 2400 or Ultem 2310, available from SABIC Innovative Plastics Holding BV.

When all of the caps have been secured and the jigs removed, the rib feet are secured to the wing skin by blind fasteners. Figure 9 shows an example for the cap 50. The wing skin 60 is held against the rib foot 12, then fastener holes are drilled though the wing skin 60, the rib foot 12 and the insulating barrier 43. Drilled material may be removed by a vacuum extraction system to prevent accumulation inside the cap 50.

Note that the fastener holes are formed after the adhesive material 54 has cured, so the caps are not dislodged.

Note also that the fastener holes are formed by drilling through the wing skin 16, the rib foot 12 and the insulating barrier 43 in a single drilling operation.

The blind fasteners 70 are then inserted. Each blind fastener 70 has a tail which is inserted through a rib foot 12 and the wing skin 60 via a respective fastener hole and into a respective one of the spark containment caps.

In this example each jig is removed before the rib feet are secured with the fasteners. In other embodiments, the jigs may be left in place and only removed after the fasteners have been inserted. This is less preferred since access to the inside of the wing box will be required in order to remove the jigs and trimming of the stubs of cured adhesive material will be more difficult.

Note that the wing skin 60 is not removed for cleaning or de-burring between drilling and insertion of the blind fasteners 70. This is known as "single sided assembly".

On insertion, the tail of the blind fastener can fit though the fastener holes. The fastener 70 is known as a blind fastener, as it can be installed and expanded from only one side.

The blind fastener 70 comprises a bolt with an axially extending shaft 74, a head of the shaft, and a tubular sleeve 76 fitted around the shaft 74. The shaft 74 has a threaded portion on its outer circumference at one end which is the opposite end to the head of the shaft 75. The tubular sleeve 76 has a corresponding thread on its internal circumference such that the tubular sleeve 76 will travel along the shaft 74 as it is rotated. The blind fastener 70 also has a collar 77 provided around the head end of the bolt.

During installation, the tail of the fastener 70 is inserted into the cap 50, then the shaft 74 is rotated to cause the tubular sleeve 76 to be drawn towards the collar 77. When the tubular sleeve 76 contacts the collar 77, the tubular sleeve 76 deforms and splays outwardly forming an expanded portion or bulb which clamps against the insulating barrier 43 as shown in Figure 9.

The material of the barrier 43 needs to be electrically insulating and able to withstand the bearing pressure of the fastener bulb. Examples of suitable materials include glass filled polyetherimide (PEI) such as ULTEM 2400 or 2300 (40% and 30%) available from SABIC Innovative Plastics Holding BV, or carbon (or glass) fibre reinforced polymer (CFRP or GFRP).

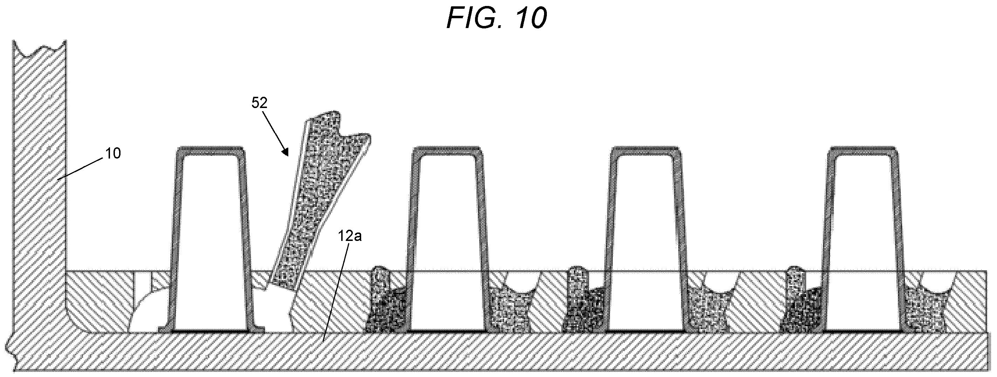

The injection process of Figure 4 is repeated for all of the caps in each of the sockets 32-34: either one-after the other using a single injection device, or multiple injection-devices may be used simultaneously on different caps if needed to increase the speed of operation. Figure 10 gives an example of a jig assembly in which caps are injected one-after the other by a single injection device 52. Note that the example of Figure 10 shows a rib foot 12a with four rows of caps, compared with the rib foot 12 of Figure 2 which only has a single row of caps.

The jig 22 has two profiled jig features which each match a corresponding profiled feature of the rib: namely the profiled outer edge 36 of the jig (Figure 6) which matches the profiled outer edge 26 of the rib foot (Figure 5); and the convex profiled surface 37 (Figure 4) which contacts and mates with the concave profiled surface 25 at the root of the rib foot.

These profiled jig features 36, 37 are aligned with the corresponding profiled features 26, 25 of the rib 5 to locate and orient the jig assembly as it is mounted on the rib.

The profiled jig feature 37 contacts the corresponding profiled feature 25 of the rib, but the profiled jig feature 36 does not (it is merely used as a visual alignment aid).

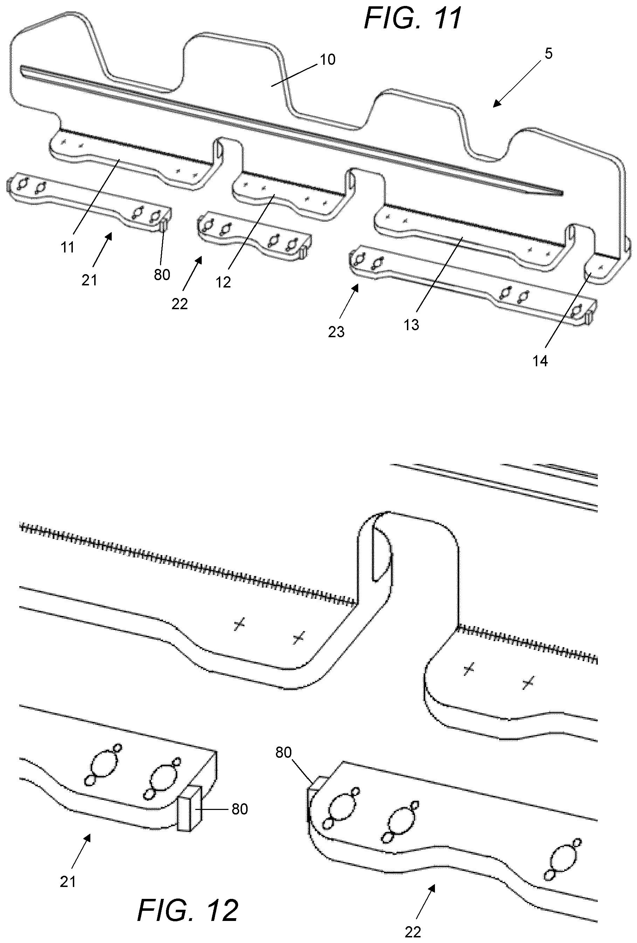

Figures 11 and 12 show an alternative embodiment in which the jigs have further profiled jig features which make it easier to positively locate and orient the jig assembly.

The jigs 21-23 in Figures 11 and 12 are almost identical to the jigs in Figures 2 and 3, so the same reference numbers are used for equivalent elements which will not be described again.

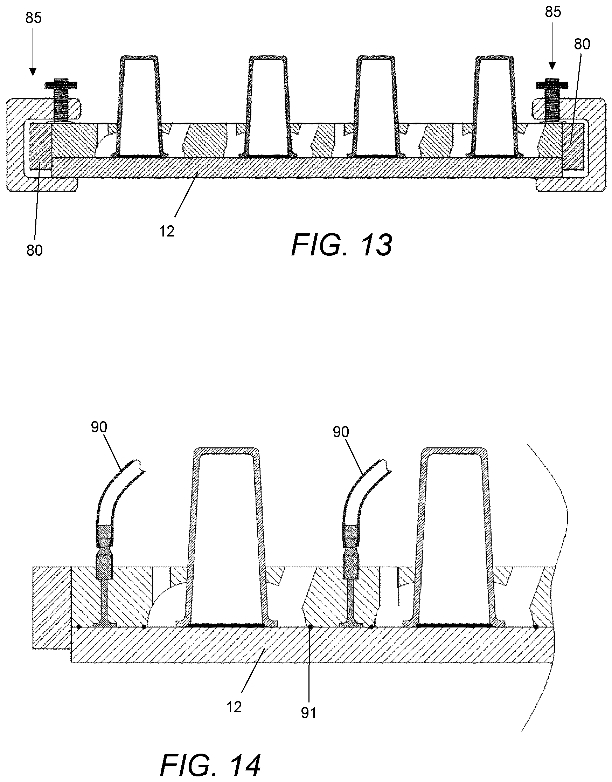

Each jig has a pair of profiled jig features 80 which project below the lower surface of the jig as shown in Figure 13. The projecting part of each profiled jig feature 80 contacts a respective edge of the rib foot 12 to accurately locate and orient the jig assembly.

As noted above, the jigs 21-23 are optionally clamped to hold them in place. Figure 13 shows a first type of clamping arrangement which may be used for the jig assemblies. In this case, the clamping arrangement comprises a pair of G-clamps 85 at opposite ends of the jig assembly. Figure 14 shows a second type of clamping arrangement: in this case a vacuum system applies a vacuum at the interface between the rib foot and the jig via multiple vacuum hoses 90 (two are shown, but there may be more). Note that the evacuated region is sealed by appropriate seals 91 to prevent adhesive material from being sucked into the vacuum system.

The clamping arrangements of Figures 13 and 14 not only press the jig against the rib foot 12, but also press the spark containment caps against the rib foot with the jig to clamp the spark containment caps to the rib foot. This prevents the caps from being dislodged during injection of the adhesive material, and ensures an intimate fit between the cap and the rib foot to prevent the ingress of adhesive material into the cavity 42 of the cap and leakage of adhesive material outside the bond area.

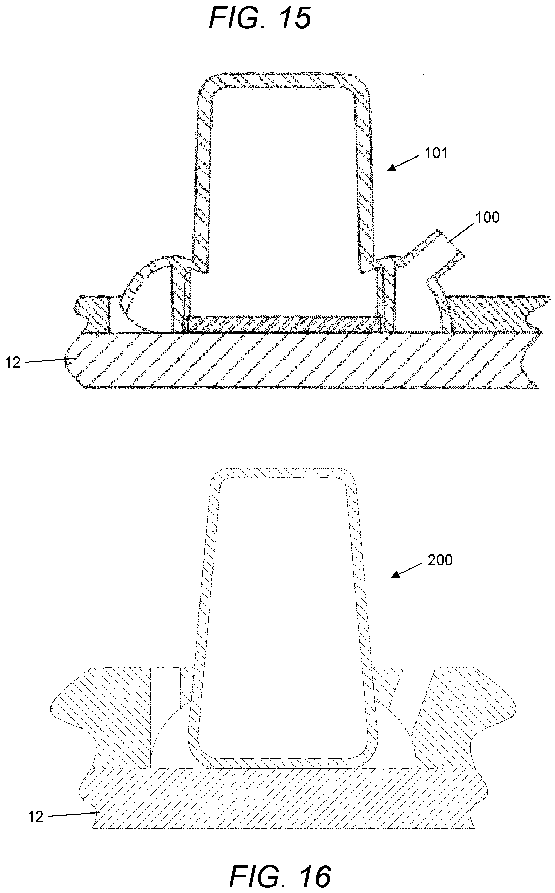

In the examples above the adhesive material is injected via jig injection ports into a pocket 31 between the cap base and the jig. In the alternative example of Figure 15, the jig has no injection ports but instead the adhesive material is injected through an injection port 100 in a skirt of a spark containment cap 101.

Figure 16 shows an alternative cap 200 which is manufactured as a single piece by blow moulding. Blow moulding has lower tooling and production costs compared to injection moulding, and can offer a quicker, easier and cheaper manufacturing alternative to typical spark containment caps. The cap 200 is required to be formed of a material which can be blow moulded, but which is also resistant to long term exposure to fuel. Examples of such a material could be Nylon PA6, PA66 and PA12. Another example may be ULTEM^{™} 2300, although this material would need to be injection moulded, not blow moulded. These materials may require additional treatment or primer paint application to enhance adhesive properties depending on the requirements of the caps 200.

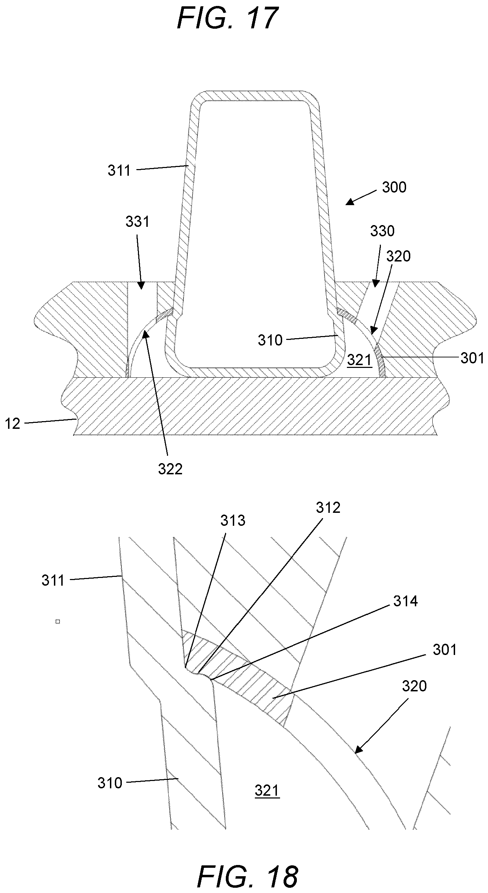

Figure 17 shows another alternative blow-moulded cap 300 which is manufactured as a single piece by blow moulding and fitted with a separate skirt 301.

The spark containment cap comprises: a cap base 310 which contacts the rib foot 12 and is located in a pocket in the jig, a cap body 311 which protrudes from the pocket and receives the tail of the fastener, and a ledge 312 between the cap base 310 and the cap body 311. As shown in Figure 18, the ledge 312 meets the cap body 311 at a concave corner 313, and the ledge 312 meets the cap base at a convex corner 314. The skirt 301 is seated on the ledge 312 as shown in Figure 18.

The skirt 301 comprises a skirt injection port 320 and a skirt exhaust port 322. The adhesive material is injected into a pocket 321 between the skirt 301 and the cap base 310 via a jig injection port 330 and the skirt injection port 320. The adhesive material cures to form an adhesive bond with the rib foot, an adhesive bond with the cap base 310, and an adhesive bond with the skirt 301.

Air displaced by the adhesive material escapes via the skirt exhaust port 322 and a jig exhaust port 331 during the injection of the adhesive material.

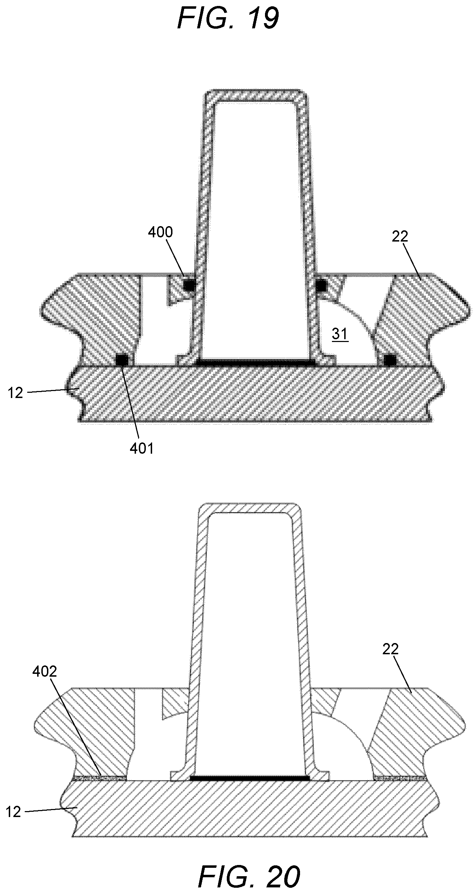

Figures 19-22 show alternative jig assmblies in which the jig comprises resilient seal members, formed from a resilient material such as an elastomer, which inhibit the escape of the adhesive material during injection. Each resilient seal member contacts the rib foot 12 or a respective one of the spark containment caps.

In the case of Figure 19 the resilient members comprise a first O-ring 400 around the axial hole of the pocket 50, and a second O-ring 401 around the opening of the pocket 50.

In the case of Figure 20, the resilient member comprises a gasket 402 between the jig 22 and the rib foot 12.

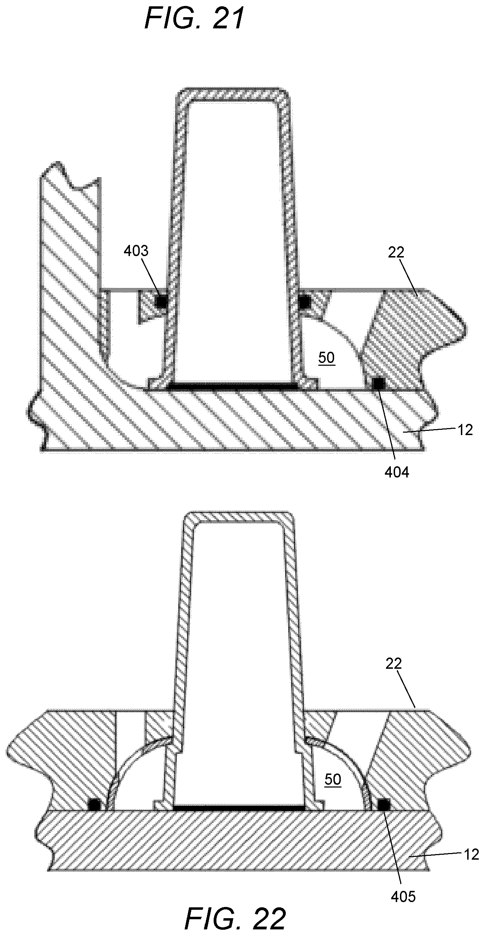

In the case of Figure 21, the resilient members comprise a first O-ring 403 around the axial hole of the pocket 50, and a second O-ring 404 between the jig 22 and the rib foot 12.

In the case of Figure 22, the resilient members comprise an O-ring 405 around the opening of the pocket 50.

In summary, the embodiments above provide fastener caps with cavities which contain ignition hazards (sparking or ejection of hot gas/particles).

The accurate positioning of the caps enables drilling break-out inside the cap whilst minimising the diameter of the cap required.

A bonding jig 22 is provided. In some embodiments the jig 22 comprises a plate with a plurality of pockets 31-34 each configured to receive a respective spark containment cap. Each pocket has an opening terminating at a rim 56, and an axial hole opposite the opening through which the cap can protrude. The jig has a plurality of jig injection ports 51 each configured to enable adhesive material to be injected into a respective one of the pockets 31-34 via the jig injection port; and a plurality of jig exhaust ports 53 each configured to enable air to escape from a respective one of the pockets 31-34 via the jig exhaust port. Optionally a resilient member may be provided around each opening and/or around each axial hole.

The bonding jig enables multiple caps to be easily placed in precise positions on the structure and includes a means of injecting and forming a consistent and robust bead of adhesive or sealant around the base of each cap.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A method of securing a first structure (12) to a second structure (60), the method comprising: providing a jig assembly comprising spark containment caps (50) carried by a jig (22); mounting the jig assembly so that the spark containment caps (50) and the jig contact the first structure (12); securing the spark containment caps to the first structure by injecting adhesive material (54) into contact with the first structure and the spark containment caps and then curing the adhesive material (54); removing the jig (22) after the adhesive material has cured; and securing the first structure (12) to the second structure (60) with fasteners (70), each fastener having a tail which is inserted through the first and second structures and into a respective one of the spark containment caps (50).

2. A method according to claim 1, wherein the jig comprises jig injection ports (51), and the adhesive material (54) is injected into contact with each spark containment cap through a respective one of the jig injection ports (51).

3. A method according to claim 2, wherein each spark containment cap comprises a cap base (39) which contacts the first structure and is located in a respective pocket (31) of the jig and a cap body (41) which receives the tail of a respective fastener and protrudes from the pocket; and the adhesive material is injected into each pocket via a respective one of the jig injection ports.

4. A method according to any preceding claim, wherein air displaced by the adhesive material (54) escapes via exhaust ports (53) during the injection of the adhesive material.

5. A method according to any preceding claim, wherein the adhesive material is injected into contact with the jig (22); an adhesive bond is formed between the adhesive material and the jig on curing of the adhesive material; and the adhesive bond is broken to enable the removal of the jig.

6. A method according to any preceding claim, wherein the jig (22) has a profiled jig feature (37) which matches a corresponding profiled feature (25) of the first structure, and the profiled jig feature is aligned with the corresponding profiled feature of the first structure to locate and orient the jig assembly as it is mounted .

7. A method according to any preceding claim, further comprising forming fastener holes through the first and second structures after the adhesive material has cured, wherein the tails of the fasteners are inserted through the fastener holes.

8. A method according to any preceding claim, wherein the jig (22) is removed before the first structure (12) is secured to the second structure (60) with the fasteners.

9. A method according to any preceding claim, wherein each spark containment cap (50) is carried in a respective pocket of the jig.

10. A method according to any preceding claim, further comprising clamping the jig (22) to the first structure with a clamping force; and removing the clamping force to enable the jig to be removed.

11. A method according to any preceding claim, further comprising pressing the spark containment caps (50) against the first structure with the jig (22) to clamp the spark containment caps to the first structure.

12. A method according to any preceding claim, further comprising expanding the tails of the fasteners (70) after they have been inserted into the spark containment caps.

13. A method according to any preceding claim, wherein the jig comprises resilient seal members (400, 401), each resilient seal member contacts the first structure or a respective one of the spark containment caps, and each resilient seal member (400, 401) inhibits the escape of the adhesive material during injection.

14. A method according to any preceding claim, wherein the spark containment cap comprises: a cap base (310) which contacts the first structure (12), a cap body (311) which receives the tail of the fastener, and a ledge (312) between the cap base and the cap body, wherein the ledge meets the cap body at a concave corner (313) and the ledge meets the cap base at a convex corner (314); a skirt (301) which is seated on the ledge, the skirt comprising an skirt injection port (320); and a pocket (321) between the skirt and the cap base, wherein the adhesive material is injected into the pocket via the skirt injection port and cures to form an adhesive bond with the first structure, an adhesive bond with the cap base, and an adhesive bond with the skirt.

15. A jig comprising a plate with a plurality of pockets (31-34) each configured to receive a respective spark containment cap, each pocket having an opening terminating at a rim (56), and an axial hole opposite the opening; a plurality of jig injection ports (51) each configured to enable adhesive material to be injected into a respective one of the pockets via the jig injection port; and a plurality of jig exhaust ports (53) each configured to enable air to escape from a respective one of the pockets via the jig exhaust port.

## Patentansprüche

1. Verfahren zum Befestigen einer ersten Struktur (12) an einer zweiten Struktur (60), wobei das Verfahren Folgendes umfasst: Bereitstellen einer Spannvorrichtungsanordnung, die die Funkenschutzkappen (50) umfasst, die von einer Spannvorrichtung (22) getragen werden; Anbringen der Spannvorrichtungsanordnung, so dass die Funkenschutzkappen (50) und die Spannvorrichtung die erste Struktur (12) berühren; Befestigen der Funkenschutzkappen an der ersten Struktur durch Einspritzen von Haftmaterial (54) in Kontakt mit der ersten Struktur und den Funkenschutzkappen, und dann Aushärten des Haftmaterials (54); Entfernen der Spannvorrichtung (22), nachdem das Haftmaterial ausgehärtet ist; und Befestigen der ersten Struktur (12) an der zweiten Struktur (60) mit Befestigungselementen (70), wobei jedes Befestigungselement ein hinteres Ende aufweist, das durch die erste und zweite Struktur und in eine entsprechende der Funkenschutzkappen (50) eingeführt wird.

2. Verfahren nach Anspruch 1, wobei die Spannvorrichtung Spannvorrichtungseinspritzanschlüsse (51) umfasst, und das Haftmaterial (54) in Kontakt mit jeder Funkenschutzkappe durch einen entsprechenden der Spannvorrichtungseinspritzanschlüsse (51) eingespritzt wird.

3. Verfahren nach Anspruch 2, wobei jede Funkenschutzkappe eine Kappenbasis (39), die die erste Struktur berührt und sich in einem entsprechenden Beutel (31) der Spannvorrichtung befindet, und einen Kappenkörper (41), der das hintere Ende eines entsprechenden Befestigungselements aufnimmt und aus dem Beutel hervorragt, umfasst; und das Haftmaterial über einen entsprechenden der Spannvorrichtungseinspritzanschlüsse in jeden Beutel eingespritzt wird.

4. Verfahren nach einem vorstehenden Anspruch, wobei während der Einspritzung des Haftmaterials von dem Haftmaterial (54) verdrängte Luft über Auslassanschlüsse (53) entweicht.

5. Verfahren nach einem vorstehenden Anspruch, wobei das Haftmaterial in Kontakt mit der Spannvorrichtung (22) eingespritzt wird; eine Haftbindung zwischen dem Haftmaterial und der Spannvorrichtung nach dem Aushärten des Haftmaterials gebildet wird; und die Haftbindung gebrochen wird, um die Entfernung der Spannvorrichtung zu ermöglichen.

6. Verfahren nach einem vorstehenden Anspruch, wobei die Spannvorrichtung (22) ein profiliertes Spannvorrichtungsmerkmal (37) aufweist, das zu einem entsprechenden profilierten Merkmal (25) der ersten Struktur zusammenpasst, und das profilierte Spannvorrichtungsmerkmal mit dem entsprechenden profilierten Merkmal der ersten Struktur fluchtet, um die Spannvorrichtungsanordnung bei deren Anbringung zu lokalisieren und auszurichten.

7. Verfahren nach einem vorstehenden Anspruch, weiter umfassend das Bilden von Befestigungselementlöchern durch die erste und zweite Struktur, nachdem das Haftmaterial ausgehärtet ist, wobei die hinteren Enden der Befestigungselemente durch die Befestigungselementlöcher eingeführt werden.

8. Verfahren nach einem vorstehenden Anspruch, wobei die Spannvorrichtung (22) entfernt wird, bevor die erste Struktur (12) mit den Befestigungselementen an der zweiten Struktur (60) befestigt wird.

9. Verfahren nach einem vorstehenden Anspruch, wobei jede Funkenschutzkappe (50) in einem entsprechenden Beutel der Spannvorrichtung getragen wird.

10. Verfahren nach einem vorstehenden Anspruch, weiter umfassend das Klemmen der Spannvorrichtung (22) an die erste Struktur mit einer Klemmkraft; und das Entfernen der Klemmkraft, um zu ermöglichen, dass die Spannvorrichtung entfernt wird.

11. Verfahren nach einem vorstehenden Anspruch, weiter umfassend das Drücken der Funkenschutzkappen (50) gegen die erste Struktur mit der Spannvorrichtung (22), um die Funkenschutzkappen an die erste Struktur zu klemmen.

12. Verfahren nach einem vorstehenden Anspruch, weiter umfassend das Expandieren der hinteren Enden der Befestigungselemente (70), nachdem diese in die Funkenschutzkappen eingeführt wurden.

13. Verfahren nach einem vorstehenden Anspruch, wobei die Spannvorrichtung elastische Dichtungselemente (400, 401) umfasst, jedes elastische Dichtungselement die erste Struktur oder eine entsprechende der Funkenschutzkappen berührt und jedes elastische Dichtungselement (400, 401) das Entweichen des Haftmaterials während des Einspritzens verhindert.

14. Verfahren nach einem vorstehenden Anspruch, wobei die Funkenschutzkappe Folgendes umfasst: eine Kappenbasis (310), die die erste Struktur (12) berührt, einen Kappenkörper (311), der das hintere Ende des Befestigungselements aufnimmt, und eine Leiste (312) zwischen der Kappenbasis und dem Kappenkörper, wobei die Leiste an einer konkaven Ecke (313) auf den Kappenkörper trifft und die Leiste an einer konvexen Ecke (314) auf die Kappenbasis trifft; eine Schürze (301), die auf der Leiste aufsitzt, wobei die Schürze einen Schürzeneinspritzanschluss (320) umfasst; und einen Beutel (321) zwischen der Schürze und der Kappenbasis, wobei das Haftmaterial über den Schürzeneinspritzanschluss in den Beutel eingespritzt wird und sich aushärtet, um eine Haftbindung mit der ersten Struktur, eine Haftbindung mit der Kappenbasis und eine Haftbindung mit der Schürze zu bilden.

15. Spannvorrichtung, umfassend eine Platte mit einer Vielzahl von Beuteln (31-34), die jeweils ausgebildet sind, um eine entsprechende Funkenschutzkappe aufzunehmen, wobei jeder Beutel eine Öffnung, die an einem Rand (56) endet, und ein axiales Loch gegenüber der Öffnung aufweist; eine Vielzahl von Spannvorrichtungseinspritzanschlüsse (51), die jeweils ausgebildet sind, um zu ermöglichen, dass Haftmaterial in einen entprechenden der Beutel über den Spannvorrichtungseinspritzanschluss eingespritzt wird; und eine Vielzahl von Spannvorrichtungsauslassanschlüssen (53), die jeweils ausgebildet sind, um zu ermöglichen, dass Luft aus einem entsprechenden der Beutel über den Spannvorrichtungsauslassanschluss entweicht.

## Revendications

1. Procédé de fixation d'une première structure (12) à une deuxième structure (60), le procédé consistant à : fournir un ensemble gabarit comprenant des capuchons de confinement d'étincelles (50) portés par un gabarit (22) ; monter l'ensemble gabarit de sorte que les capuchons de confinement d'étincelles (50) et le gabarit soient en contact avec la première structure (12) ; fixer les capuchons de confinement d'étincelles à la première structure par injection de matériau adhésif (54) en contact avec la première structure et les capuchons de confinement d'étincelles puis durcissement du matériau adhésif (54) ;
retirer le gabarit (22) après que le matériau adhésif a durci ; et fixer la première structure (12) à la deuxième structure (60) avec des organes de fixation (70), chaque organe de fixation présentant une queue qui est insérée à travers les première et deuxième structures et dans un des capuchons de confinement d'étincelles (50) respectif.

2. Procédé selon la revendication 1, dans lequel le gabarit comprend des orifices d'injection de gabarit (51), et le matériau adhésif (54) est injecté en contact avec chaque capuchon de confinement d'étincelles à travers un des orifices d'injection de gabarit (51) respectif.

3. Procédé selon la revendication 2, dans lequel chaque capuchon de confinement d'étincelles comprend une base de capuchon (39) qui est en contact avec la première structure et est située dans un logement respectif (31) du gabarit et un corps de capuchon (41) qui reçoit la queue d'un organe de fixation respectif et fait saillie depuis le logement ; et le matériau adhésif est injecté dans chaque logement via un des orifices d'injection de gabarit respectif.

4. Procédé selon une quelconque revendication précédente, dans lequel de l'air déplacé par le matériau adhésif (54) s'échappe via des orifices d'échappement (53) pendant l'injection du matériau adhésif.

5. Procédé selon une quelconque revendication précédente, dans lequel le matériau adhésif est injecté en contact avec le gabarit (22) ; une liaison adhésive est formée entre le matériau adhésif et le gabarit lors du durcissement du matériau adhésif ; et la liaison adhésive est rompue pour permettre le retrait du gabarit.

6. Procédé selon une quelconque revendication précédente, dans lequel le gabarit (22) présente un élément profilé de gabarit (37) qui correspond à un élément profilé correspondant (25) de la première structure, et l'élément profilé de gabarit est aligné avec l'élément profilé correspondant de la première structure pour positionner et orienter l'ensemble gabarit lorsqu'il est monté.

7. Procédé selon une quelconque revendication précédente, consistant en outre à former des trous d'organes de fixation à travers les première et deuxième structures après durcissement du matériau adhésif, dans lequel les queues des organes de fixation sont insérées à travers les trous d'organes de fixation.

8. Procédé selon une quelconque revendication précédente, dans lequel le gabarit (22) est retiré avant que la première structure (12) soit fixée à la deuxième structure (60) avec les organes de fixation.

9. Procédé selon une quelconque revendication précédente, dans lequel chaque capuchon de confinement d'étincelles (50) est porté dans un logement respectif du gabarit.

10. Procédé selon une quelconque revendication précédente, consistant en outre à serrer le gabarit (22) contre la première structure avec une force de serrage ; et à supprimer la force de serrage pour permettre au gabarit d'être retiré.

11. Procédé selon une quelconque revendication précédente, consistant en outre à appuyer les capuchons de confinement d'étincelles (50) contre la première structure avec le gabarit (22) pour serrer les capuchons de confinement d'étincelles contre la première structure.

12. Procédé selon une quelconque revendication précédente, consistant en outre à étendre les queues des organes de fixation (70) après qu'elles ont été insérées dans les capuchons de confinement d'étincelles.

13. Procédé selon une quelconque revendication précédente, dans lequel le gabarit comprend des organes d'étanchéité résilients (400, 401), chaque organe d'étanchéité résilient est en contact avec la première structure ou un des capuchons de confinement d'étincelles respectif, et chaque organe d'étanchéité résilient (400, 401) empêche l'échappement du matériau adhésif pendant l'injection.

14. Procédé selon une quelconque revendication précédente, dans lequel le capuchon de confinement d'étincelles comprend : une base de capuchon (310) qui est en contact avec la première structure (12), un corps de capuchon (311) qui reçoit la queue de l'organe de fixation, et un épaulement (312) entre la base de capuchon et le corps de capuchon, dans lequel l'épaulement rejoint le corps de capuchon au niveau d'un angle concave (313) et l'épaulement rejoint la base de capuchon au niveau d'un angle convexe (314) ; une jupe (301) qui repose sur l'épaulement, la jupe comprenant un orifice d'injection de jupe (320) ; et un logement (321) entre la jupe et la base de capuchon, dans lequel le matériau adhésif est injecté dans le logement via l'orifice d'injection de jupe et durcit pour former une liaison adhésive avec la première structure, une liaison adhésive avec la base de capuchon, et une liaison adhésive avec la jupe.

15. Gabarit comprenant une plaque avec une pluralité de logements (31-34), chacun étant configuré pour recevoir un capuchon de confinement d'étincelles respectif, chaque logement présentant une ouverture se terminant à un bord (56), et un trou axial opposé à l'ouverture ;
une pluralité d'orifices d'injection de gabarit (51), chacun étant configuré pour permettre au matériau adhésif d'être injecté dans un des logements respectif via l'orifice d'injection de gabarit ; et une pluralité d'orifices d'échappement (53) de gabarit, chacun étant configuré pour permettre à de l'air de s'échapper d'un des logements respectif via l'orifice d'échappement de gabarit.
